# EUROPÄISCHE PATENTSCHRIFT

(11) **EP 1 360 086 B1**
(45) Veröffentlichungstag und Bekanntmachung des Hinweises auf die Patenterteilung: **19.10.2005**
(21) Anmeldenummer: 02710841.4
(22) Anmeldetag: 06.02.2002
(51) Int. Cl.: B60N 2/42

(54) **Sitz, insbesondere Fahrzeugsitz, vorzugsweise Fluggastsitz**
Seat, particularly a Vehicle Seat, preferably in an Airplane
Siège, en particulier siège de véhicule, destiné de préférence à un passager d'avion

(30) Priorität: 16.02.2001 DE 10107197
(43) Veröffentlichungstag der Anmeldung: 12.11.2003
(73) Patentinhaber: Recaro Aircraft Seating GmbH & Co.KG., 74523 Schwäbisch Hall (DE)
(72) Erfinder: WAGNER, Wolfgang, 88048 Friedrichshafen (DE); BAUMANN, Jürgen, 78351 Bodman-Ludwigshafen (DE)
(74) Vertreter: Bartels, Martin Erich Arthur
(86) Internationale Anmeldenummer: PCT/EP2002/001190
(87) Internationale Veröffentlichungsnummer: WO 2002/066284

(56) Entgegenhaltungen:
- DE-A- 4 003 776
- DE-A- 19 853 981
- FR-A- 1 586 051
- US-A- 2 682 931

## Beschreibung

Die Erfindung betrifft einen Sitz, insbesondere Fahrzeugsitz, vorzugsweise Fluggastsitz, mit mindestens einer, zumindest in ihrer Höhe einstellbaren Sitzkomponente, wie einem Sitzteil, die mit ihrer Sitzrahmenstruktur über Ständerbeine verschwenkbar auf einer Bodenstruktur aufständerbar ist, wobei die Ständerbeine paarweise im Bereich der Sitzvorder- und der Sitzhinterkante des Sitzteils an diesem angreifen, mit einer Betätigungseinrichtung, die eine mehrteilige Bewegungsmechanik aufweist mit mindestens einem Steuerteil zum Einstellen der jeweiligen Höhe für das Sitzteil und mit einer Ausgangsposition, bei der das Sitzteil im wesentlichen zur Bodenstruktur parallel ausgerichtet ist, wobei in dieser Ausgangsposition die Betätigungseinrichtung sich zwischen den Ständerbeinen derart erstreckt, daß das eine Ende im Bereich der Sitzvorderkante gegen die Bodenstruktur und das andere Ende im Bereich der Sitzhinterkante in Richtung der Sitzrahmenstruktur weist, und mit mindestens einem Versteifungsteil, das mittels des zugeordneten Steuerteils in Wirkverbindung mit der Betätigungseinrichtung steht.

In der nachveröffentlichten DE 199 44 620 ist ein Fluggastsitz beschrieben, der aus einzelnen Sitzkomponenten einschließlich einer Beinauflage und einer Rückenlehne besteht. Die genannten Sitzkomponenten sind mittels Betätigungseinrichtungen in Form sog. Stellantriebe oder Aktuatoren bewegbar, die von einer von Hand bedienbaren Betätigungseinrichtung zum Einstellen des Sitzes an die Belange des jeweiligen Sitzbenutzers ansteuerbar sind. Dabei.sind für die Sitzteile den Konturen dieser Sitzteile nachempfundene Griffhebel als Teil der Betätigungseinrichtung vorhanden, die für eine Einstellung des Fluggastsitzes in einem Bedienteil zusammengefaßt eine.sinnfällige Einstellung für die jeweiligen Sitzkomponenten ergeben. Um zu vermeiden, daß der Sitzbenutzer beim Einstellen der Sitzkomponenten an seine Bedürfnisse an feststehende Hindernisse anstößt, wie beispielsweise an den rückwärtigen Bereich einer Rückenlehne eines in der Sitzlängsrichtung vorausfolgenden Sitzes, sind bei den Stellantrieben Anschläge vorgesehen, gegen den die jeweilige Sitzkomponente fährt, wobei die dahingehende jeweilige Anschlagschranke auch bei Weiterbetätigen der zugehörigen Bedientaste nicht überschritten werden kann. Eine andere Möglichkeit besteht im Abschalten des Antriebes durch Grenznockenschalter od. dgl.. Das Anfahren dahingehender Begrenzungsschranken geschieht bei den bekannten Sitzkonstruktionen nicht immer ruckfrei, was zu einer Beeinträchtigung des Sitzkomforts führen kann. Auch ist die jeweilige Sitzkomponente über Anschläge in den Maximal-Auslenkstellungen gesichert, was jedoch im Crashfall dazu führen kann, daß die Sitzrahmenstruktur einschließlich der Ständerbeine in sich zusammenklappt, was die Sicherheit bekannter Sitzlösungen entsprechend beeinträchtigt.

Durch die DE-A-40 03 776 ist ein Fahrzeugsitz, insbesondere Kraftfahrzeugsitz, bekannt mit einem mittels einer Einstellvorrichtung relativ zur freischwenkbaren Rückenlehne einstellbaren Polsterträger des Sitzteils, wobei zumindest in einer Position des Polsterträgers oberhalb seiner untersten Stellung der Polsterträger des Sitzteils mittels der Einstellvorrichtung vor oder zu Beginn einer Freischwenkung der Rückenlehne aus seiner Ausgangsposition heraus nach vorne und/oder zumindest im Bereich seines hinteren Endabschnittes nach unten und nach dem oder beim Zurückschwenken der Rückenlehne in deren Ausgangsstellung zurück in die Ausgangsposition bewegbar ist. Obwohl die bekannte Einstellvorrichtung auch zu der Höhen- und/oder Neigungseinstellung des Polsterträgers des Sitzteils eingesetzt werden kann, sind die Einstellmöglichkeiten für die einzelnen Sitzteile reduziert, auch wenn bei einer vorteilhaften Ausgestaltung der bekannten Lösung an eine Schwinge der Einstellvorrichtung ein längenveränderbares Einstellelement angelenkt ist, bei dem es sich beispielsweise um eine von einem Motor antreibbare Gewindespindel oder um einen Arbeitszylinder handeln kann.

Durch die US-PS 2,784,764 ist ein gattungsgemäßer Sitz bekannt mit zwei Paaren an Ständerbeinen, die schwenkbar an einem Sitzteil angreifen sowie an einer Boden-Aufständervorrichtung für den Sitz. Zwischen den Ständerbeinen erstreckt sich als Betätigungseinrichtung ein Aktuator in Form einer Rollspindelvorrichtung, wobei das eine Ende im Bereich der Sitzvorderkante gegen die Bodenstruktur weist und das andere Ende im Bereich der Sitzhinterkante in Richtung der Sitzrahmenstruktur. Das eine freie Ende des Aktuators ist an ein Steuerteil beweglich angelenkt, das mit einer U-förmigen Sitzschiene verbunden eine Kulissenführung aufweist für ein stangenartiges Versteifungsteil, das sich im Ausgangszustand und mithin in der angehobenen Lage des Sitzteils zwischen den hinteren Ständerbeinen und der genannten Kulissen-Längsführung quer zu der Längsrichtung der Betätigungseinrichtung erstreckt. Obwohl die bekannte Lösung sehr steif ausgebildet ist und mithin auch bei einem Crash erhöhten Sicherheitsanforderungen gerecht werden dürfte, ist es mit der bekannten Lösung nur möglich, das Sitzteil in einer einmal fest vorgegebenen Neigung in verschiedene Sitzhöhen einzustellen und dergestalt an die Anforderungen des Sitzbenutzers anzupassen.

Ausgehend von diesem Stand der Technik liegt der Erfindung die Aufgabe zugrunde, die bekannten Sitze, insbesondere Fahrzeugsitze, wie Fluggastsitze, dahingehend weiter zu verbessern, daß der jeweilige Sitz als Gesamtsystem auch im Crashfall ein hohes Maß an Sicherheit gewährleistet und dennoch eine Vielzahl an Einstellmöglichkeiten für den Sitz vorsieht, insbesondere auch bezogen auf die Höhen- und Neigungseinstellung des eigentlichen Sitzteils. Gleichzeitig soll die verbesserte Lösung nur wenig Einbauraum am Sitz in Anspruch nehmen und kostengünstig realisierbar sein. Eine dahingehende Aufgabe löst ein Sitz mit den Merkmalen des Patentanspruches 1 in seiner Gesamtheit.

Dadurch, daß gemäß dem kennzeichnenden Teil des Patentanspruches 1 die Bewegungsmechanik über mindestens ein Koppelteil die bewegbare Kopplung zwischen dem jeweiligen Steuerteil und dem zuordenbaren Versteifungsteil herstellt und daß in der Ausgangsposition das jeweilige Versteifungsteil im wesentlichen parallel zur Längsausrichtung der Betätigungseinrichtung angeordnet ist, werden die im Crashfall auftretenden Kräfte über die Betätigungseinrichtung mit jeweiligem Versteifungsteil sicher und zielgerichtet in die Bodenstruktur, beispielsweise in Form eines Fahrzeug- oder Flugzeugkabinenbodens, abgeleitet, wobei die Betätigungseinrichtung die Ständerbeine zumindest in der Ausgangsposition derart auch im Crashfall auseinanderhält, daß die Sitzrahmenstruktur des Gesamtsitzes in jedem Fall erhalten bleibt. Demgemäß bleiben auch die einzelnen Sitzkomponenten in ihrer Struktur im wesentlichen erhalten, so daß im Crashfall Schaden von dem jeweiligen Sitzbenutzer abgewendet wird. Da im Crashfall eine der Hauptbelastungsrichtungen aufgrund des Gewichts des Sitzbenutzers an der Sitzhinterkante des Sitzteils auftritt, werden die dort auftretenden Belastungskräfte in einem Winkel von ca. 45° bei aufgerichteter Sitzstellung in den jeweiligen Fahrzeug- oder Flugzeugzeugkabinenboden abgeleitet.

Durch den Einsatz eines weiteren Koppelteils lassen sich die Verfahr- und Einstellmöglichkeiten für die Betätigungseinrichtung in Verbindung mit den Ständerbeinen sowie für das jeweilige Versteifungsteil erhöhen, so daß der Sitz mit seinem Sitzteil nicht nur in der Höhe im vorgegebenem Rahmen nahezu beliebig einstellbar ist, sondern zumindest bezogen auf das Sitzteil ist auch eine Vielzahl von Neigungseinstellungen ohne weiteres über die nachgeführten Ständerbeine möglich, was in dieser Form mit den bekannten Lösungen bisher nicht erreicht werden konnte (vgl. US 2,784,764).

Bei einer bevorzugten Ausführungsform des erfindungsgemäßen Sitzes ist vorgesehen, daß die Betätigungseinrichtung einen Aktuator aufweist, der gehäuseseitig mit einem Grundrahmengestell verbunden ist; über das der Sitz mit der Bodenstruktur verbindbar ist und der stangenseitig eine mehrteilige Bewegungsmechanik aufweist, die mit einer Bewegungsachse zusammenwirkt, die sich zwischen zwei Ständerbeinen erstreckt, die im Bereich des Überganges zwischen Sitzteil und einer Rückenlehne an der Sitzrahmenstruktur schwenkbar angelenkt sind. Ohne dadurch die Bewegungsmöglichkeiten, insbesondere die Neigungs-Einstellmöglichkeiten für den Sitz einzuschränken, wird hierdurch ein steifer Sitzrahmen aufgespannt, der in allen Richtungen gleichermaßen die im Crashfall auftretenden Belastungen aufnehmen kann. Vorzugsweise hält dabei die Bewegungsachse als rohrartiges Versteifungssegment die beiden hinteren Ständerbeine auf Abstand und weitere rohrartige Versteifungssegmente erstrecken sich zwischen der Bewegungsachse und der Bewegungsmechanik.

Bei einer weiteren bevorzugten Ausführungsform des erfindungsgemäßen Sitzes erstrecken sich beidseitig des Aktuatorgehäuses zwei als Versteifungsteile ausgebildete Versteifungsstangen, die an ihrem einen freien Ende gelenkig mit dem Grundrahmengestell verbunden sind und an ihrem anderen freien Ende jeweils eine Anlenkstelle für ein Paar an zuordenbaren Versteifungssegmenten aufweisen. Auf diese Art und Weise ist der eigentliche Aktuator mit seiner Betätigungsstange bzw. mit seiner Antriebsmechanik entlastet. Vorzugsweise ist dabei das Steuerteil mit seinem einen Ende gelenkig im Bereich des freien Endes der Betätigungsstange an dieser festgelegt und weist an einem weiteren Ende eine Anlenkstelle für eine zuordenbare Versteifungsstange auf.

Bei einer besonders bevorzugten Ausführungsform des erfindungsgemäßen Sitzes ist eine Anlagestelle zwischen Steuerteil und Koppelteil in Richtung des freien Endes der Betätigungsstange außerhalb einer fiktiven Verbindungslinie zwischen Bewegungsachse und Anlenkstelle des Aktuatorgehäuses am Grundrahmengestell angeordnet, so daß in dieser Verriegelungsstellung etwaig längs der fiktiven Verbindungslinie eingeleitete Crashkräfte aufgrund dieser "Überzenterung" dazu führen, daß die Anlagestelle in Richtung des Steuerteils als sicheres Widerlager bewegt wird. Mithin ist ein Nachgeben und Zusammenklappen des Sitzes im Crashfall aufgrund der Klemmkräfte der Bewegungsmechanik weitestgehend ausgeschlossen.

Weitere vorteilhafte Ausgestaltungen des erfindungsgemäßen Sitzes sind Gegenstand der sonstigen Unteransprüche.

Im folgenden wird der erfindungsgemäße Sitz anhand einer Ausführungsform.eines Fluggastsitzes nach der Zeichnung näher beschrieben. Dabei zeigen in prinzipieller und nicht maßstäblicher Darstellung die
- Fig.1: eine Seitenansicht auf den Fluggastsitz ohne Beinauflage und ohne Polsterteile;
- Fig.2: eine perspektivische Ansicht auf einen Teil der Bewegungsmechanik des Fluggastsitzes nach der Fig.1, sofern dieser um eine vertikale Achse um 180° verschwenkt ist;
- Fig.3 bis 5: eine Seitendarstellung auf einen Teil der modellhaft wiedergegebenen Bewegungsmechanik nach der Fig.2, sofern diese auf.das Sitzteil einwirkt und dieses aus einer Ausgangsposition nach der Fig.3 in eine Komfortposition nach der Fig.4 und in eine Bettposition nach der Fig.5 bringt.

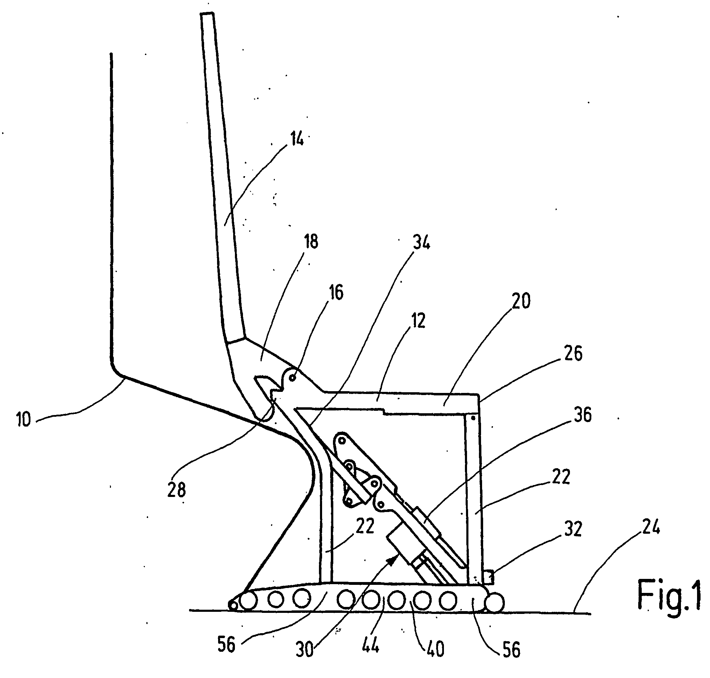

Die Darstellung nach der Fig.1 zeigt einen Fluggastsitz in aufrechter Stellung (Upright-Position). Dahingehende Fluggastsitze mit dem entsprechenden Ausstattungsniveau finden sich häufig im 1.Klasse-Bereich von Langstrecken-Flugzeugen; könnten dem Grunde nach aber auch im Bereich von gehoben ausgestatteten Reisebussen oder bei Passagierschiffen einschließlich Fähren Verwendung finden. Des weiteren läßt sich der Sitz auch als medizinischer Behandlungsstuhl auch im OP- oder Zahnarztbereich einsetzen. Weitere Anwendungen sind im sportmedizinischen Bereich zu sehen oder auch als Anwendungsstuhl im Bereich der Kosmetik.

Der gezeigte Fluggastsitz nach der Fig.1 ist vorzugsweise Bestandteil eines Einzelabteils (Compartment), das andeutungsweise in der Fig.1 dargestellt ist. Der Fluggastsitz könnte dem Grunde nach aber auch in Reihe mehrfach nebeneinander angeordnet im Business-Class-Bereich für eine übliche Mehrsitzanordnung od. dgl. Verwendung finden.

Der Fluggastsitz ist aus einzelnen Sitzkomponenten zusammengesetzt, wie einem Sitzteil 12, einer Rückenlehne 14 und einem nicht näher dargestellten Beinauflagesystem. Der besseren Darstellung wegen ist darüber hinaus die Polsterauflage für die genannten Sitzkomponenten in der Fig.1 weggelassen, so daß die darunterliegenden Rahmenteile entsprechend sichtbar sind. Die Rückenlehne 14 ist über eine nicht näher dargestellte Betätigungsmechanik in ihrer Neigung gegenüber dem in der Ausgangsposition im wesentlichen horizontal verlaufenden Sitzteil 12 schwenkbar um eine Gelenkstelle 16 angeordnet. Der Rahmen der Rückenlehne 14 mündet an seinem unteren Ende in einem Gabelendstück 18, wobei das eine Gabelende mit der nicht näher dargestellten Betätigungsmechanik zusammenwirkt und das andere Gabelende an der Gelenkstelle 16 angreift.

Das Sitzteil 12 ist darüber hinaus mit einer Sitzrahmenstruktur 20 versehen, die über vier Ständerbeine 22 verschwenkbar auf einer Bodenstruktur 24 aufständerbar ist. Eine dahingehende Bodenstruktur 24 ist beispielsweise durch den Flugzeugkabinenboden gebildet. Die Ständerbeine 22 greifen dabei paarweise im Bereich der Sitzvorderkante 26 und der Sitzhinterkante 28 des Sitzteils 12 an. Des weiteren ist eine als Ganzes mit 30 bezeichnete Betätigungseinrichtung vorhanden zum Einstellen der jeweiligen Neigung für das Sitzteil 12, wobei in der Ausgangsposition nach der Fig.1 das Sitzteil 12 im wesentlichen zur Bodenstruktur 24 parallel ausgerichtet ist und mithin in dieser horizontalen Ausrichtung keine Neigung aufweist.

In der in den Fig.1 bis 3 dargestellten Ausgangsposition des Sitzteils 12 erstreckt sich die Betätigungseinrichtung 30 mit ihren wesentlichen Komponenten derart zwischen den vorderen und hinteren Paaren an Ständerbeinen 22, daß das eine Ende 32 der Betätigungseinrichtung 30 im Bereich der Sitzvorderkante 26 gegen die Bodenstruktur 24 und das andere Ende 37 der Betätigungseinrichtung 30 im Bereich der Sitzhinterkante 28 in Richtung der Sitzrahmenstruktur 20 weist. Hierdurch ist eine sichere Aufspannung der Sitzrahmengrundstruktur 20 mit den vier Ständerbeinen 22 erreicht. Des weiteren erstreckt sich die Betätigungseinrichtung 30 in der Art einer Aufspannstange innerhalb der Sitzstruktur und in der Ausgangsposition des Sitzes mit horizontal ausgerichtetem Sitzteil 12 und aufgestellter Rückenlehne 14 werden die im Crashfall gegebenenfalls impulsartig auftretenden Belastungskräfte über die Betätigungseinrichtung 30 in die Bodenstruktur 24 abgeleitet. Durch die dahingehend ausgesteifte Anordnung, wobei die Betätigungseinrichtung sich zwischen den Ständerbeinen 22 im wesentlichen in einem Winkel von 45° zur Bodenstruktur 24 erstreckt, werden die insbesondere an der Sitzhinterkante 28 aufgrund der Gewichtskraft des Sitzbenutzers auftretenden Kräfte in dieser Schrägstellung über den vorderen Bereich des Sitzes in die Bodenstruktur 24 eingeleitet. Durch die geneigte Anordnung der Betätigungseinrichtung 30 entsteht also eine wirksame Gegenhaltekraft, die den Sitz in seiner Ausgangslage hält und insbesondere dafür Sorge trägt, daß weder die Sitzrahmenstruktur 20 noch die sonstigen strukturellen Sitzkomponenten in sich verwunden werden, was gegebenenfalls die Verletzungsgefahr für den Sitzbenutzer erhöhen könnte.

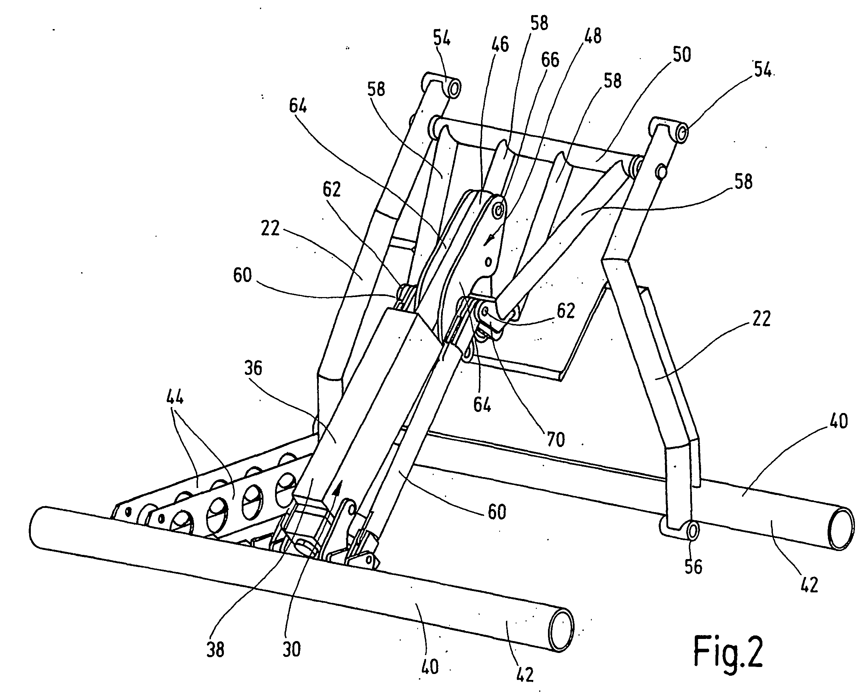

Wie insbesondere die Fig. 2 zeigt, weist die Betätigungseinrichtung 30 einen Aktuator 36 auf, der mit seinem Gehäuse 38 mit einem Grundrahmengestell 40 schwenkbar verbunden ist. Über das dahingehende Grundrahmengestell 40 ist der Sitz als Ganzes mit der Bodenstruktur 24 des Flugzeuges verbindbar. Gemäß der Darstellung nach der Fig.2 sind der Einfachheit halber nur die beiden Grundrahmenrohre 42 des Grundrahmengestells 40 dargestellt sowie die beiden hinteren Bodenschienen 44, die sich längs des Sitzes an den beiden freien Enden des jeweiligen Grundrahmenrohres 42 anschließen. Der Aktuator 36 kann aus einem hydraulisch oder pneumatisch betätigbaren Arbeitszylinder, gegebenenfalls aus einem Spindeltrieb od. dgl. bestehen; ist.im vorliegend gezeigten Fall aber mit einem Elektromotor versehen, der dafür Sorge trägt, daß eine Betätigungsstange 46 des Aktuators 36 aus seinem Gehäuse 38 ein- und ausfahren kann. Die Ausgestaltung dahingehender Aktuatoren ist Stand der Technik, so daß an dieser Stelle hierauf nicht mehr näher eingegangen wird.

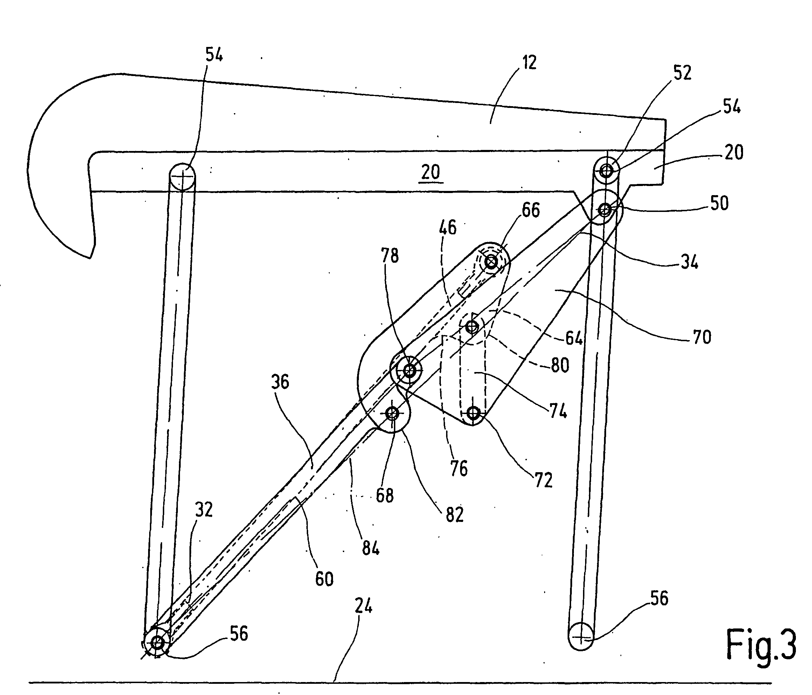

Am freien Ende der Betätigungsstange 46 weist die Betätigungseinrichtung 30 eine mehrteilige, als Ganzes mit 48 bezeichnete Bewegungsmechanik auf. Die dahingehende Bewegungsmechanik 48 wirkt mit einer Bewegungsachse 50 zusammen, die sich zwischen dem hinteren Ständerbeine-Paar 22 erstreckt, und zwar im Bereich der Sitzhinterkante 28 des Fluggastsitzes nach der Fig.1. Der besseren Darstellung wegen wurde in der Fig.2 auf die Wiedergabe des vorderen Ständerbeine-Paares 22 verzichtet. Wie insbesondere die Fig.3 zeigt, verläuft die Bewegungsachse 50 unterhalb der Sitzrahmenstruktur 20 und unterhalb der jeweiligen Anlenkstelle 52, über die die jeweiligen oberen Enden 54 der Ständerbeine 22 schwenkbar an der Sitzrahmenstruktur 20 angelenkt sind. Die unteren Enden 56 der jeweiligen Ständerbeine 22 sind wiederum schwenkbar an die sich paarweise in Längsrichtung erstreckenden Bodenschienen 44 angelenkt.

Wie die Fig.2 des weiteren zeigt, hält die Bewegungsachse 50 als rohrartiges Versteifungssegment ausgebildet die beiden hinteren Ständerbeine 22 auf Abstand zueinander und vier weitere rohrartige Versteifungssegmente 58 erstrecken sich zwischen dieser Bewegungsachse 50 und der angesprochenen Bewegungsmechanik 48. Mithin ist die rohrartige Bewegungsachse 50 auch in Blickrichtung auf die Fig.2 gesehen nach unten hin ausgesteift und in diesem Bereich eingeleitete Crashkräfte werden über die Betätigungseinrichtung 30 in das Grundrahmengestell 40 und mithin in die Bodenstruktur 24 sicher abgeleitet. Zur weiteren Aussteifung des Sitzgestells sind des weiteren rechts und links zwei Versteifungsstangen 60 als Versteifungsteile vorgesehen, die an ihrem einen freien Ende wiederum gelenkig mit dem Grundrahmengestell 40 verbunden sind und an ihrem anderen freien Ende jeweils eine Anlenkstelle 62 für ein Paar an zuordenbaren Versteifungssegmenten 58 aufweisen. Über die dahingehenden Versteifungssegmente 58 ist sichergestellt, daß die als rohrartiges Versteifungssegment ausgebildete Bewegungsachse 50 sich nicht im Crashfall ungewollt verformen kann und mithin in jedem Fall sicherstellt, daß das hintere Paar an Ständerbeinen 22 auseinandergehalten wird.

Um die Funktion der Bewegungsmechanik besser verdeutlichen zu können, ist in den Fig.3, 4 und 5 diese modellhaft dargestellt, wobei jedoch die dort gezeigte Funktion sich auch im Hinblick auf die praktische Ausführungsform nach der Fig.2 ergibt.

Die Bewegungsmechanik 48 weist beidseitig der Aktuatöreinrichtung ein hakenartiges Steuerteil 64 auf, das jeweils mit seinem einen Ende 66 gelenkig im Bereich des freien Endes der Betätigungsstange 46 an dieser angelenkt ist. Des weiteren weist das jeweilige Steuerteil 64 an einem weiteren Ende 68 eine Anlenkstelle für die jeweils zuordenbare Versteifungsstange 60 auf. Des weiteren stellt die Bewegungsmechanik 48 über beidseitig des Aktuators 36 angeordnete Koppelteile 70 die bewegbare Kopplung zwischen Bewegungsachse 50, dem jeweiligen Steuerteil 64 und der zuordenbaren Versteifungsstange 60 her. In der praktischen Ausführung ist das Koppelteil 70 in der Art eines Winkelsteges ausgebildet; in der theoretischen Modellform jedoch nach den Fig. 3ff als dreieckförmige Verbindungsplatte.

Wie die Fig.3 bis 5 des weiteren zeigen, ist das dreieckförmige jeweilige Koppelteil 70 an seinem einen Dreiecksende schwenkbar an der Bewegungsachse 50 angelenkt, am gegenüberliegenden anderen Dreiecksende in schwenkbarer Verbindung mit der zuordenbaren Versteifungsstange 60 und über ihre Dreiecksspitze 72 und ein stangenartiges Koppelglied 74 schwenkbar an dem Steuerteil 64 angelenkt. Dabei ist das jeweilige Steuerteil 64 mit einer Steuerkante 76 versehen, die in der.Ausgangsposition des Sitzes gemäß der Darstellung nach der Fig.3 in Anlage ist mit der Anlenkstelle 78 der jeweils zuordenbaren Versteifungsstange 60 am Koppelteil 70. Das stangenartige Koppelglied 74 ist mithin mit seinem einen freien Ende an der Dreiecksspitze 72 des Koppelteiles 70 schwenkbar angelenkt und mit seinem anderen freien Ende an einem Anschlußhöcker 80 des Steuerteils 64. Die angesprochene Steuerkante 76 des Steuerteils 64 erstreckt sich mithin zwischen dem genannten Anschlußhöcker 80 und dem hakenartigen Ende 82 des Steuerteils 64 mit dem weiteren Ende 68, an dem eine der beiden Versteifungsstangen 60 angelenkt ist.

Gemäß der Darstellung nach der Fig.3 ist eine Anlenkstelle in Form der Anlagestelle 78 zwischen Steuerteil 64 und Koppelteil 70 in Richtung des freien Endes der Betätigungsstange 46 außerhalb einer fiktiven Verbindungslinie 84 zwischen Bewegungsachse 50 und Anlenkstelle 56 des Aktuatorgehäuses 38 am Grundrahmengestell 40 angeordnet. Mithin ist die Anlagestelle 78 an die Steuerkante 76 des Steuerteils 64 als Widerlager angelehnt und der dahingehende Drehpunkt in Richtung der Sitzrahmenstruktur 20 "überzentert", so daß bei einer Krafteinleitung im Crashfall in Richtung der fiktiven Verbindungslinie 84 in der Art eines Kniehebels die Anlagestelle 78 überstreckt wird mit der Folge, daß durch diese außermittige Anlenkung ein wirksames Widerlager gebildet ist. Mithin erhöhen sich die Kräfte des Widerlagers, sobald die Kräfte längs der fiktiven Verbindungslinie 84 entsprechend zunehmen.

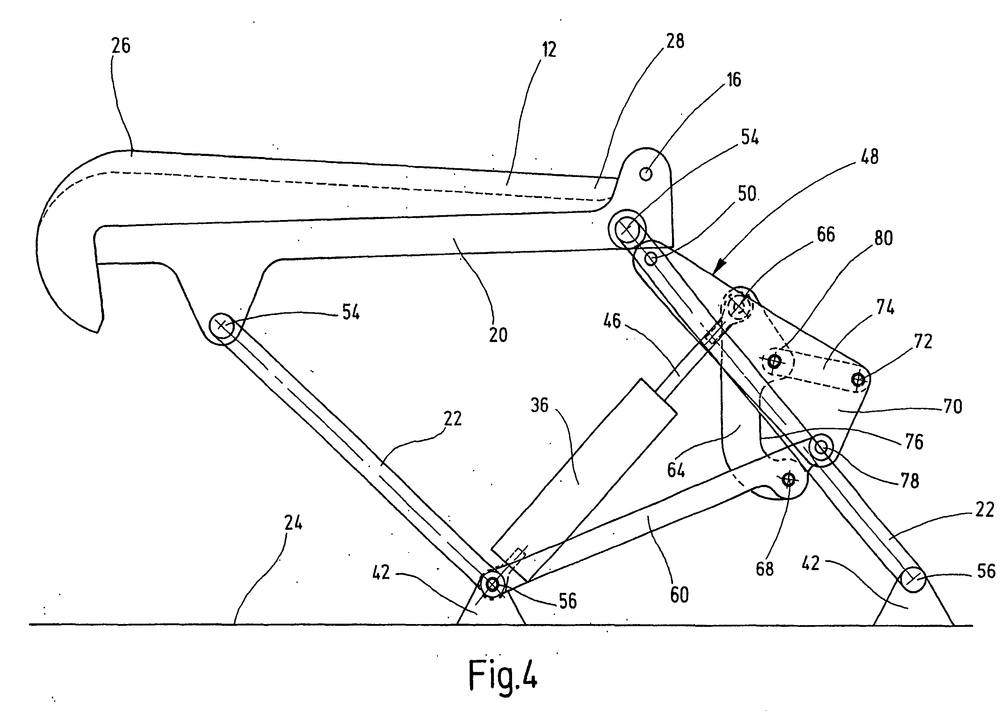

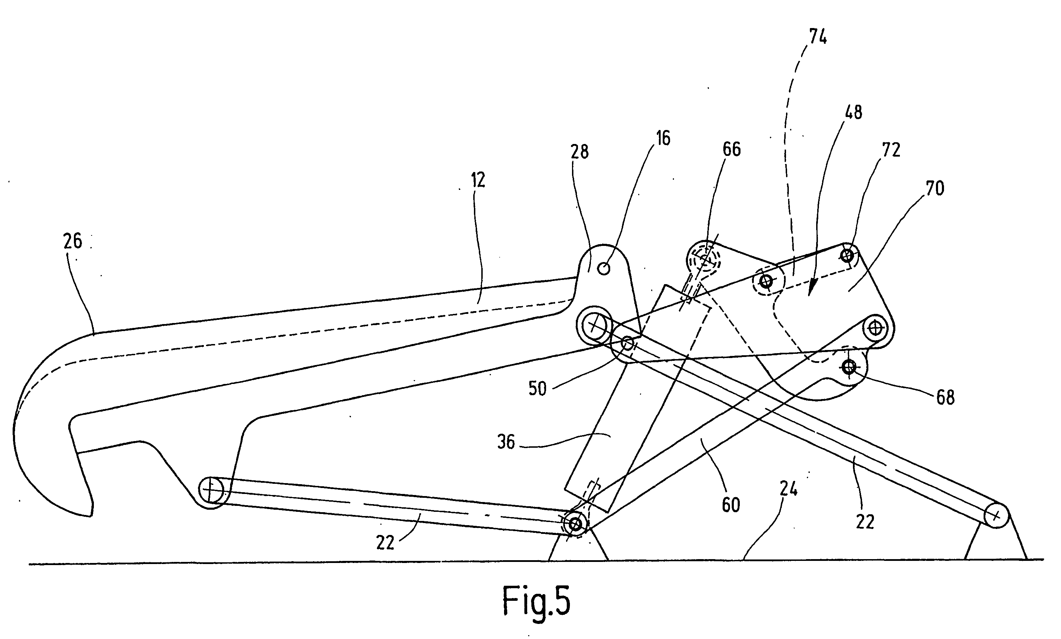

In einer voll ausgefahrenen Stellung des Aktuators 36 ist das Sitzteil 12 mit dem Sitzrahmengestell 20 im wesentlichen horizontal ausgerichtet. Wird nun die Betätigungsstange 46 in Richtung des Aktuatorgehäuses 38 eingefahren, ergibt sich eine Art Komfortposition gemäß der Darstellung nach der Fig.4, bei der die Sitzhinterkante 28 in vertikaler Richtung tiefer angeordnet ist gegenüber der Bezugsebene in Form der Sitzvorderkante 26. In der dahingehenden Komfortposition ist mithin der Oberschenkelbereich eines. Sitzbenutzers entsprechend hoch gelagert, was eine angenehme Sitzposition zur Folge hat. Dabei sind nach der Fig.4 dann die Paare an Ständerbeinen 22 entgegen dem Uhrzeigersinn nach vorne verschwenkt und sowohl das Steuerteil 64 als auch das Koppelteil 70 haben eine Schwenkbewegung im Uhrzeigersinn, um die Anlenkstelle 66 bzw. um die Bewegungsachse 50 zu durchlaufen. Eine zusätzliche Aussteifung erfolgt dabei über das stabartige Koppelglied 74. Sofern die Betätigungsstange 46 noch weiter in Richtung des Aktuatorgehäuses 38 einfährt, ergibt sich eine Art Bett- oder Liegeposition gemäß der Darstellung nach der Fig.5 und die Ständerbeine 22 sind entgegen dem Uhrzeigersinn um ihre unteren Drehpunkte noch weiter nach vorn geneigt. Nunmehr ist die Sitzvorderkante 26 gegenüber der Sitzhinterkante 28 nach unten geneigt, wobei die Möglichkeit besteht, daß die Sitzteilpolster von Rückenlehne 14 (nicht dargestellt), Sitzteil 12 und der nicht näher dargestellten Beinauflage eine schräg geneigte Auflage- bzw. Ruhefläche bilden. In der dahingehenden Bettposition ist sowohl das Koppelteil 70 als auch das Koppelglied 74 mit der Dreiecksspitze 72 in vertikaler Richtung über die Bewegungsachse 50 nach oben bewegt und das eine Ende 66 des Steuerteils 64 ist im wesentlichen in einer horizontalen Ebene zu der Gelenkstelle 16 angeordnet. Mithin ist es möglich, mit nur einer Betätigungseinrichtung 30 verschiedenste Sitzpositionen über ein Bedienteil (nicht dargestellt) anzusteuern, wobei in der aufrechten Sitzposition nach der Fig.3 ausschließlich ein etwaiger Crashfall angenommen wird.

Die Betätigungseinrichtung 30 mit der Bewegungsmechanik 48 benötigt nur wenig Einbauraum und ist darüber hinaus auch gewichtssparend. Über die Bewegungsmechanik 48 wird darüber hinaus sichergestellt, daß mit nur einem kleinen Verfahrweg des Aktuators 36 in einem weit gezogenen Rahmen eine Einstellmöglichkeit für das Sitzteil 12 erreicht wird.

## Patentansprüche

1. Sitz, insbesondere Fahrzeugsitz, vorzugsweise Fluggastsitz, mit mindestens einer in ihrer Höhe einstellbaren Sitzkomponente, wie einem Sitzteil (12), die mit ihrer Sitzrahmenstruktur (20) über Ständerbeine (22) verschwenkbar auf einer Bodenstruktur (24) aufständerbar ist, wobei die Ständerbeine (22) paarweise im Bereich der Sitzvorder(26)- und der Sitzhinterkante (28) des Sitzteils (12) an diesem angreifen, mit einer Betätigungseinrichtung (30), die eine mehrteilige Bewegungsmechanik (48) aufweist mit mindestens einem Steuerteil (64) zum Einstellen der jeweiligen Höhe für das Sitzteil (12) und mit einer Ausgangsposition, bei der das Sitzteil (12) im wesentlichen zur Bodenstruktur (24) parallel ausgerichtet ist, wobei in dieser Ausgangsposition die Betätigungseinrichtung (30) sich zwischen den Ständerbeinen (22) derart erstreckt, daß das eine Ende (32) im Bereich der Sitzvorderkante (26) in die Bodenstruktur (24) und das andere Ende (34) im Bereich der Sitzhinterkante (28) in Richtung der Sitzrahmenstruktur (20) weist, und mit mindestens einem Versteifungsteil (60), das mittels des zugeordneten Steuerteils (64) in Wirkverbindung mit der Betätigungseinrichtung (30) steht, **dadurch gekennzeichnet, daß** die Bewegungsmechanik (48) über mindestens ein Koppelteil (70) die bewegbare Kopplung zwischen dem jeweiligen Steuerteil (64) und dem zuordenbaren Versteifungsteil (60) herstellt und daß in der Ausgangsposition das jeweilige Versteifungsteil (60) im wesentlichen parallel zur Längsausrichtung der Betätigungseinrichtung (30) angeordnet ist.

2. Sitz nach Anspruch 1, **dadurch gekennzeichnet, daß** die Betätigungseinrichtung (30) einen Aktuator (36) aufweist, der gehäuseseitig mit einem Grundrahmengestell (40) verbunden ist, über das der Sitz mit der Bodenstruktur (24) verbindbar ist und der stangenseitig eine mehrteilige Bewegungsmechanik (48) aufweist, die mit einer Bewegungsachse (50) zusammenwirkt, die sich zwischen zwei Ständerbeinen (22) erstreckt, die im Bereich des Übergangs zwischen Sitzteil (12) und einer Rückenlehne (14) an der Sitzrahmenstruktur (20) schwenkbar angelenkt sind.

3. Sitz nach Anspruch 2, **dadurch gekennzeichnet, daß** die Bewegungsachse (50) als rohrartiges Versteifungssegment die beiden hinteren Ständerbeine (22) auf Abstand hält und weitere rohrartige Versteifungssegmente (58) sich zwischen der Bewegungsachse (50) und der Bewegungsmechanik (48) erstrecken.

4. Sitz nach Anspruch 3, **dadurch gekennzeichnet, daß** beidseitig des Aktuatorgehäuses (38) sich zwei als Versteifungsteile (60) ausgebildete Versteifungsstangen erstrecken, die an ihrem einen freien Ende gelenkig mit dem Grundrahmengestell (40) verbunden sind und an ihrem anderen freien Ende jeweils eine Anlenkstelle (62) für ein Paar an zuordenbaren Versteifungssegmenten (58) aufweisen.

5. Sitz nach einem der Ansprüche 2 bis 4, **dadurch gekennzeichnet, daß** das Steuerteil (64) mit seinem einen Ende (66) gelenkig im Bereich des freien Endes der Betätigungsstange (46) an dieser festgelegt ist und an einem weiteren Ende (68) eine Anlenkstelle für eine zuordenbare Versteifungsstange (60) aufweist.

6. Sitz nach einem der Ansprüche 1 bis 5, **dadurch gekennzeichnet, daß** das jeweilige Steuerteil (64) mit einer Steuerkante (74) versehen ist, die in der Ausgangsposition des Sitzes in Anlage ist mit einer Anlenkstelle (76) der jeweils zuordenbaren Versteifungsstange (60) am Koppelteil (70).

7. Sitz nach Anspruch 6, **dadurch gekennzeichnet, daß** eine Anlagestelle (78) zwischen Steuerteil (64) und Koppelteil (70) in Richtung des freien Endes der Betätigungsstange (46) außerhalb einer fiktiven Verbindungslinie (84) zwischen Bewegungsachse (50) und Anlenkstelle (56) des Aktuatorgehäuses (38) am Grundrahmengestell (40) angeordnet ist.

8. Sitz nach einem der Ansprüche 2 bis 7, **dadurch gekennzeichnet, daß** in einer voll ausgefahrenen Stellung des Aktuators (36) das Sitzteil (12) in Ausgangsposition ist, daß in einer teilweise eingefahrenen Stellung das Sitzteil (12) in einer Komfortposition ist, bei der die Sitzvorderkante (26) höher geneigt ist als die Sitzhinterkante (28), und daß in einer voll eingefahrenen Stellung des Aktuators (36) zum Erreichen einer Bettposition die Sitzvorderkante (26) gegenüber der Sitzhinterkante (28) abgesenkt ist.

9. Sitz nach einem der Ansprüche 3 bis 8, **dadurch gekennzeichnet, daß** die Bewegungsachse in Richtung der Bodenstruktur (24) unterhalb der Verbindungsstellen angeordnet ist, über die das Sitzteil (12) schwenkbar mit den hinteren Standbeinen (22) verbunden ist.

## Claims

1. Seat, especially a vehicle seat, preferably an aeroplane passenger seat, with at least one height adjustable seat component such as a seat part (12), the same being tiltably positionable on a floor structure (24) with its seat frame structure (20) via upright legs (22), whereby the upright legs (22) engage the area of the front (26) and rear (28) seat edge of the seat part (12) in pairs, with an activating means (30), the same incorporating a multi-part movement mechanism (48) with at least one control part (64) for adjusting the relevant height of the seat part (12), and with a starting position in which the seat part (12) is aligned substantially parallel with the floor structure (24), whereby the activating means (30) extends between the upright legs (22) in this starting position in such a way that one end (32) points in the direction of the floor structure (24) within the area of the front seat edge (26), and the other end (34) in the direction of the seat frame structure (20) in the area of the rear seat edge (28), and with at least one reinforcement part (60), the same standing in effective connection with the activating means (30) via the allocated control part (64), **characterised in that** the movement mechanism (48) realises the moveable coupling between the relevant control part (64) and the associatable reinforcement part (60) by means of at least one coupling part (70) in the starting position, and **in that** the relevant reinforcement part (60) is positioned substantially parallel to the longitudinal direction of the activating means (30).

2. Seat according to Claim 1, **characterised in that** the activating means (30) incorporates an actuator (36), the same being connected with a base frame (40) in a housing, via which the seat can be connected with the floor structure (24), and incorporating a multi-part movement mechanism (48) in the rod area, which cooperates with a movement axis (50) extending between two upright legs (22) which are tiltably controlled within the transition area between seat part (12) and a backrest (14) of the seat frame structure (20).

3. Seat according to Claim 2, **characterised in that** the movement axis (50) distances the two rear upright legs (22) in the form of a pipe-like reinforcement element, and **in that** further pipe-like reinforcement segments (58) extend between the movement axis (50) and the movement mechanism (48).

4. Seat according to Claim 3, **characterised in that** two reinforcement rods taking the form of reinforcement parts (60) extend on both sides of the actuator housing (38), the same being jointably connected with the base frame (40) at their one free end, and incorporating a control point (62) for a pair of associatable reinforcement segments (58) at their other free end.

5. Seat according to one of the Claims 2 to 4, **characterised in that** the control part (64) is jointably affixed to the activating rod (46) within the area of the free end (66) of the same, and incorporates a control point for an associatable reinforcement rod (60) at a further end (68).

6. Seat according to one of the Claims 1 to 5, **characterised in that** the relevant control part (64) is equipped with a control edge (74) which is in abutment with a control point (76) of the coupling part (70) of the relevant associatable reinforcement rod (60) in the starting position of the seat.

7. Seat according to Claim 6, **characterised in that** an abutment point (78) is located on the base frame (40) between control part (64) and coupling part (70) in the direction of the free end of the activating rod (46) outside of a fictitious connecting line (84) between the movement axis (50) and the control point (56) of the actuator housing (38).

8. Seat according to one of the Claims 2 to 7, **characterised in that** the seat part (12) is in the starting position in a fully extended position of the actuator (36), **in that** the seat part (12) is in a comfort position in a partially retracted position, in which the front seat edge (26) is more inclined than the rear seat edge (28), and **in that** the front seat edge (26) is lowered in relation to the rear seat edge (28) in a fully retracted position of the actuator (36) in order to create the bed position.

9. Seat according to one of the Claims 3 to 8, **characterised in that** the movement axis is located below the connection points by means of which the seat part (12) is tiltably connected with the rear upright legs (22) in the direction of the floor structure (24).

## Revendications

1. Siège, en particulier siège d'avion, de préférence siège de passager d'avion, avec au moins un composant de siège réglable dans sa hauteur, comme une partie siège (12), qui peut tenir debout sur une structure de plancher (24) de manière à pouvoir pivoter avec sa structure de bâti de siège (20) par l'intermédiaire de pieds supports (22) qui s'appliquent par paire dans la zone du bord avant du siège (26) et du bord arrière du siège (28) de la partie siège (12) sur celle-ci, avec un dispositif de commande (30) qui comporte un mécanisme de mouvement en plusieurs parties (48) ayant au moins une pièce de commande (64) pour régler la hauteur correspondante de la partie de siège (12) et une position initiale dans laquelle la partie siège (12) est orientée essentiellement parallèlement à la structure de plancher (24), le dispositif de commande (30) s'étendant dans cette position initiale entre les pieds supports (22) de telle manière qu'une extrémité (32) dans la zone du bord avant du siège (26) regarde vers la structure de plancher (24) et l'autre extrémité (34) dans la zone du bord arrière du siège (28) regarde dans la direction de la structure du bâti du siège (20), et avec au moins une pièce de renfort (60) qui est en liaison active avec le dispositif de commande (30) au moyen de la pièce de commande associée (64), **caractérisé en ce que** le mécanisme de mouvement (48) établit, par l'intermédiaire d'au moins une pièce d'accouplement (70), l'accouplement mobile entre la pièce de commande (64) correspondante et la pièce de renfort pouvant être associée (60) et que dans la position initiale la pièce de renfort (60) est disposée essentiellement parallèlement à la direction longitudinale du dispositif de commande (30).

2. Siège selon la revendication 1, **caractérisé en ce que** le dispositif de commande (30) comporte un actionneur (36) qui est relié côté boîtier à un châssis de base (40) par l'intermédiaire duquel le siège peut être relié à la structure du plancher (24) et qui comporte côté tige un mécanisme de mouvement en plusieurs parties (48) qui coopère avec un axe de mouvement (50) qui s'étend entre deux pieds supports (22) qui sont articulés de manière à pouvoir pivoter sur la structure de bâti du siège (20) dans la zone de transition entre partie siège (12) et un dossier (14).

3. Siège selon la revendication 2, **caractérisé en ce que** l'axe de mouvement (50) tient, en tant que segment de renfort tubulaire, les deux pieds supports arrière (22) à distance et **en ce que** d'autres segments de renfort tubulaires (58) s'étendent entre l'axe de mouvement (50) et le mécanisme de mouvement (48).

4. Siège selon la revendication 3, **caractérisé en ce que** deux tiges de renfort, conçues comme des pièces de renfort (60), s'étendent de part et d'autre du boîtier d'actionneur (38), lesdites tiges de renfort étant reliées de manière articulée au châssis de base (40) à une de leurs extrémités libres et présentant un point d'articulation (62) pour une paire de segments de renfort pouvant être associée (58) à leur autre extrémité libre.

5. Siège selon l'une quelconque des revendications 2 à 4, **caractérisé en ce que** la pièce de commande (64) est fixée à une de ses extrémités (66) de manière articulée dans la zone de l'extrémité libre de la tige de commande (46) à celle-ci et, à une autre extrémité (68), présente un point d'articulation pour une tige de renfort (60) pouvant être associée.

6. Siège selon l'une quelconque des revendications 1 à 5, **caractérisé en ce que** la pièce de commande (64) correspondante est munie d'une arête de commande (74) qui est en contact, dans la position initiale du siège, avec un point d'articulation (76) de la tige de renfort correspondante pouvant être associée (60) sur la pièce d'accouplement (70).

7. Siège selon la revendication 6, **caractérisé en ce qu'**un point de contact (78) entre pièce de commande (64) et pièce d'accouplement (70) est disposé en direction de l'extrémité libre de la tige de commande (46) à l'extérieur d'une ligne de liaison fictive (84) entre axe de mouvement (50) et point d'articulation (56) du boîtier de l'actionneur (38) sur le châssis de base (40).

8. Siège selon l'une quelconque des revendications 2 à 7, **caractérisé en ce que**, dans une position entièrement sortie de l'actionneur (36) la partie siège (12) est dans la position initiale, que dans une position partiellement rentrée la partie siège (12) est dans une position de confort dans laquelle le bord avant du siège (26) est incliné plus haut que le bord arrière du siège (28) et que, dans une position entièrement rentrée de l'actionneur (36), le bord avant du siège (26) est abaissé par rapport au bord arrière du siège (28) afin d'atteindre une position allongée.

9. Siège selon l'une quelconque des revendications 3 à 8, **caractérisé en ce que** l'axe de mouvement est disposé en direction de la structure du plancher (24), au-dessous des points de liaison par l'intermédiaire desquels la partie siège (12) est reliée de manière pivotante avec les pieds supports arrière (22).
